# EUROPÄISCHE PATENTANMELDUNG

(11) **EP 0 955 206 A2**
(43) Veröffentlichungstag der Anmeldung: **10.11.1999**
(21) Anmeldenummer: 99108077.1
(22) Anmeldetag: 23.04.1999
(51) Int. Cl.: B60P 3/36, B60H 1/24

(54) **Montagewand**

(30) Priorität: 06.05.1998 DE 29808181 U
(71) Anmelder: ELECTROLUX SIEGEN GmbH, 57074 Siegen (DE)
(72) Erfinder: Kretzer, Adolf, 57078 Siegen (DE)
(74) Vertreter: Grosse, Wolfgang, Dipl.-Ing.

(57) **Zusammenfassung**

Eine Montagewand (1) eines Freizeitfahrzeuges umfaßt eine Serviceöffnung (6), die mit einem Abdeckelement (7) in der Form einer Klappe verschlossen ist. Hinter der Serviceöffnung (6) ist ein Gerät (2), beispielsweise ein Kühlschrank, angeordnet, dessen Rückseite durch die Serviceöffnung (6) zugängig ist. Zur Belüftung des Gerätes (2) sind in einem Abdeckelement (7) mehrere Öffnungen (3, 4) zur Be- und Entlüftung vorgesehen, die jeweils mit Lüftungsgittern (8) überdeckt sind. Zur Wartung des Gerätes (2) wird das Abdeckelement (7) von der Serviceöffnung (6) weggeschwenkt. Durch die relativ dünne Ausgestaltung des Abdeckelements (7) kann das Gerät (2) relativ nah an der Fahrzeugaußenwand (10) zur Umgebung (5) positioniert werden.

## Beschreibung

Die Erfindung betrifft eine Montagewand nach dem Oberbegriff des Anspruchs 1. Eine solche Montagewand läßt sich insbesondere bei Freizeitfahrzeugen, wie Caravans oder Wohnmobilen, einsetzen.

Es ist bei Freizeitfahrzeugen allgemein bekannt, Küchen- und sonstige zu belüftende Geräte im Innenraum des Fahrzeugs anzuordnen. Zur Belüftung des Geräts sind in der Fahrzeugaußenwand eine oder mehrere Öffnungen vorgesehen, die mit einem Lüftungsgitter überdeckt sind. Hinter der Fahrzeugaußenwand ist das Gerät so angeordnet, daß über die Lüftungagitter die Rückseite des Geräts belüftet werden kann.

Zur Wartung des Geräts wird es in den Innenraum des Fahrzeugs verschoben, um so die erforderlichen Eingriffe an der Rückseite des Geräts vornehmen zu können. Dies ist aufwendig, da die Geräte meist über mehrere Befestigungsmittel gehalten sind, die für die Wartungazwecke gelöst werden müssen. Ein weiterer Nachteil besteht darin, daß der Nutzraum in dem Fahrzeug nicht optimal ausgenutzt ist, da das Gerät maximal direkt an der Fahrzeugaußenwand positioniert werden kann. Die Fahrzeugaußenwand hat jedoch aus Sicherheits- und Isolationsgründen eine Dicke von etwa 4 cm, die an der Rückseite des zu belüftenden Geräts nicht erforderlich sind.

Es ist daher Aufgabe der vorliegenden Erfindung, eine Montagewand für ein Freizeitfährzeug zu schaffen, mit dem eine optimale Nutzung des Fahrzeuginnenraums ermöglicht wird und mit der die Wartungsarbeiten vereinfacht werden.

Diese Aufgabe wird mit einer Montagewand mit den Merkmalen des Anspruchs 1 gelöst. Um für Wartungszwecke einen Zugang zu der Rückseite des Geräts zu haben, ist eine verschließbare Service-Öffnung in der Montagewand vorgesehen, so daß kein aufwendiger Ausbau des Geräts mehr erforderlich ist. Bei entsprechender Gestaltung der Service-Öffnung läßt sich das Gerät ferner weiter zur Fahrzeugaußenwand positionieren als dies bei einer durchgehenden Fahrzeugwand möglich ist.

In einer vorteilhaften Ausgestaltung der Erfindung ist die Service-Öffnung durch ein Abdeckelement verschließbar, das mindestens eine Öffnung zur Be- und Entlüftung enthält. Dadurch kann das Abdeckelement großflächig ausgestaltet werden, wobei es vorzugsweise eine geringe Dicke hat, um den Nutzraum im Fahrzeug zu vergrößern. Vorzugsweise ist das Abdeckelement eine angelenkte Klappe oder eine lösbar befestigte Abdeckplatte, die vorteilhaft auch auf der Fahrzeugaußenwand positioniert werden kann. Um das Eindringen von Schmutz zu verhindern, sind Lüftungsgitter in dem Abdeckelement vorgesehen.

In einer vorteilhaften Ausgestaltung der Erfindung sind die Öffnungen zur Beund Entlüftung mittels flexibler Schläuche mit dem Gerät verbunden, so daß das Gerät entsprechend den individuellen Bedürfnissen in dem Fahrzeug positioniert werden kann und der Raum hinter dem Gerät für andere Zwecke nutzbar ist. Eine leichte Montage der flexiblen Schläuche wird durch die Befestigung mittels Klemmverbindung in der Öffnung erreicht.

Weitere vorteilhafte Ausgestaltungen der Erfindung sind in den Unteransprüchen gekennzeichnet. Die Erfindung wird nachfolgend anhand von Ausführungsbeispielen mit Bezug auf die beigefügten Zeichnungen beschrieben. Es zeigen:
- Fig. 1: ein erstes Ausführungebeispiel der erfindungsgemäßen Montagewand in einer Seitenansicht;
- Fig. 2: ein zweites Ausführungsbeispiel einer erfindungsgemäßen Montagewand in der Seitenansicht, und
- Fig. 3: eine perspektivische Ansicht der Montagewand der Fig. 2.

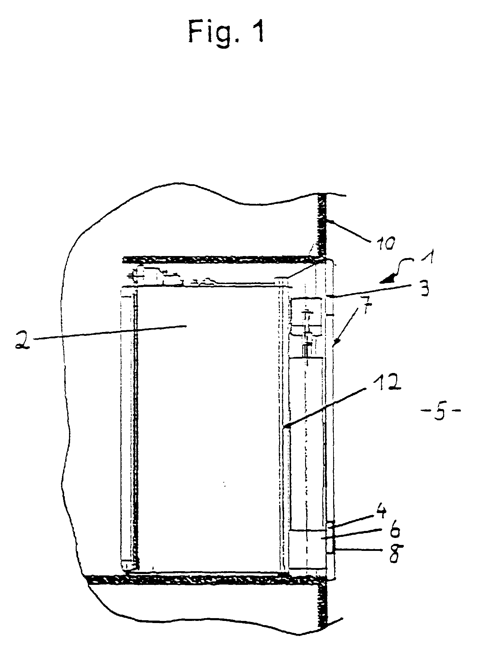

Die in der Fig. 1 gezeigte Montagewand 1 umfaßt eine Service-Öffnung 6, die mit einem Abdeckelement 7 in der Form einer Klappe verschlossen ist. Hinter der Service-Öffnung 6 ist ein Gerät 2, beispielsweise ein Kühlschrank, angeordnet, dessen Rückseite durch die Service-Öffnung 6 zugänglich ist. Zur Belüftung des Geräts 2 sind in dem Abdeckelement 7 mehrere Öffnungen 3 und 4 zur Be- und Entlüftung vorgesehen, die jeweils mit Lüftungsgittern 8 überdeckt sind. Durch die Vorsehung einer oberen Öffnung 3 und einer unteren Öffnung 4 kann die Luft an der Rückseite 12 des Geräts zirkulieren.

Zur Wartung des Geräts 2 wird das Abdeckelement von der Service-Öffnung einfach weggeschwenkt. Durch die relativ dünne Ausgestaltung des Abdeckelements 7 kann das Gerät 2 ferner näher an die Außenwand zur Umgebung 5 positioniert werden.

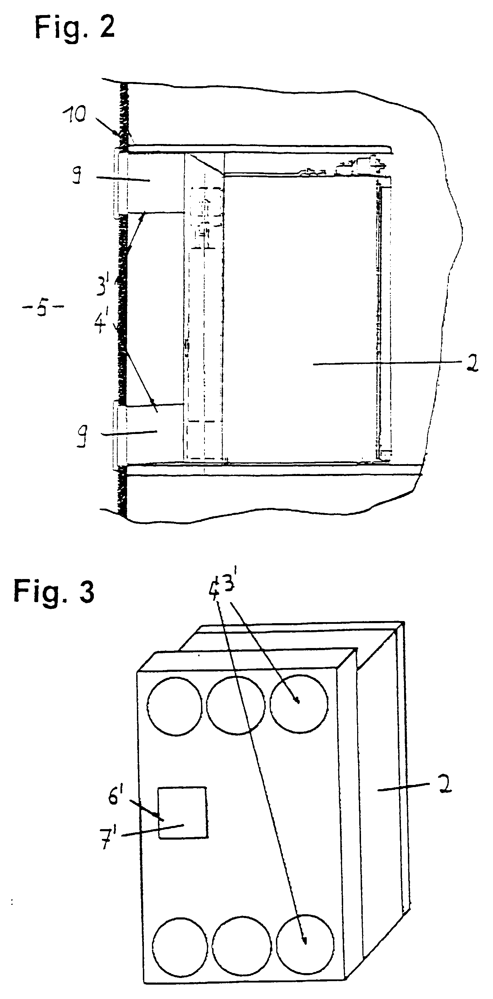

Bei dem in den Fig. 2 und 3 gezeigten Ausführungsbeispiel ist eine kleinere Service-Öffnung 6' zwischen oberen Öffnungen 3' und unteren Öffnungen 4' zur Be- und Entlüftung angeordnet. Die Service-Öffnung 6' ist durch ein entsprechendes Abdeckelement 7' verschlossen. In den Öffnungen 3', 4' zur Be- und Entlüftung sind flexible Schläuche 9 aufgenommen, die zur Rückseite des Geräts 2 führen, um diese zu belüften. Dadurch kann das Gerät 2 entsprechend den Bedürfnissen in einem unterschiedlichen Abstand zur Fahrzeugaußenwand 10 positioniert werden. Ferner kann der Raum hinter dem Gerät 2 für andere Zwecke genutzt werden.

Es ist auch möglich, das erste Ausführungsbeispiel mit dem zweiten Ausführungsbeispiel zu kombinieren, so daß bei einem großflächigen Abdeckelement im Randbereich flexible Schläuche vorgesehen werden. Das Abdeckelement und die Fahrzeugwand im Bereich des Geräts können besonders dünn ausgestaltet sein, um den Nutzraum des Fahrzeugs zu vergrößern. Ferner können verschiedene Einrichtungen zur Abdichtung des Innenraums gegenüber der Umgebung 5 vorgesehen werden, wobei vorzugsweise ein Dichtband um das Gerät 2 befestigt ist.

## Patentansprüche

1. Montagewand (1) eines Freizeitfahrzeugs, insbesondere eines Wohnmobils, an der ein zu belüftendes Gerät (2), vorzugsweise ein Küchengerät, an der Innenseite angeordnet ist, welches über mindestens eine Öffnung (3, 4; 3', 4') zur Be- und Entlüftung mit der Umgebung (5) verbunden ist,
**dadurch gekennzeichnet, daß**
zur Wartung des Geräts (2) eine verschließbare Service-Öffnung (6; 6') in der Montagewand vorgesehen ist.

2. Montagewand nach Anspruch 1, **dadurch gekennzeichnet, daß** die Service-Öffnung (6; 6') durch ein Abdeckelement (7, 7') verschließbar ist, das mindestens eine Öffnung (3, 4) zur Be- und Entlüftung enthält.

3. Montagewand nach Anspruch 2, **dadurch gekennzeichnet, daß** das Abdeckelemente (1) eine angelenkte Klappe ist.

4. Montagewand nach Anspruch 2, **dadurch gekennzeichnet, daß** das Abdeckelement eine lösbar befestigte Abdeckplatte ist.

5. Montagewand nach einem der Ansprüche 2 bis 4, **dadurch gekennzeichnet, daß** das Abdeckelement ein oder mehrere Lüftungsgitter (8) enthält.

6. Montagewand nach einem der vorhergehenden Ansprüche, **dadurch gekennzeichnet, daß** die Öffnungen (3', 4') zur Be- und Entlüftung mittels flexibler Schläuche (9) mit dem Gerät (2) verbunden sind.

7. Montagewand nach Anspruch 6, **dadurch gekennzeichnet, daß** die flexiblen Schläuche (9) mittels Klemmverbindung in den Öffnungen (3', 4') zur Be- und Entlüftung gehalten sind.

8. Montageeinheit mit einer Montagewand nach einem der vorhergehenden Ansprüche, **gekennzeichnet durch** ein zu belüftendes Küchengerät (2), das mit der Montagewand verbunden ist.

9. Montageeinheit nach Anspruch 8, **dadurch gekennzeichnet, daß** das Küchengerät zu der Montagewand abgedichtet angeordnet ist.

10. Freizeitfahrzeug, insbesondere Caravan oder Wohnmobil, **dadurch gekennzeichnet, daß** es mit einer Montageeinheit nach Anspruch 8 oder 9 versehen ist.
